# DEMANDE DE BREVET EUROPEEN

(11) **EP 1 494 116 A1**
(43) Date de publication de la demande: **05.01.2005**
(21) Numéro de dépôt: 03014928.0
(22) Date de dépôt: 01.07.2003
(51) Int. Cl.: G06F 9/44

(54) **Procédé et dispositif pour l'interfaçage graphique**

(71) Demandeur: Amadeus S.A.S., 06410 Biot (FR)
(72) Inventeur: Billiard, Jean-François, Office Medit. de Brevets, 24 rue Masséna, F-06000 Nice (FR); Laporte, Bertrand, Office Mediterraneen de Brevets, 24 rue Masséna, F-06000 Nice (FR); Caron, Pascale, Office Mediterraneen de Brevets, 24 rue Masséna, F-06000 Nice (FR); Petit, Jérôme, Office Mediterraneen de Brevets, 24 rue Masséna, F-06000 Nice (FR); Molenaar, Richard, Office Mediterraneen de Brevets, 24 rue Masséna, F-06000 Nice (FR)
(74) Mandataire: Hautier, Jean-Louis

(57) **Abrégé**

AMADEUS S.A.S.

La présente invention concerne un procédé et un dispositif pour l'interfaçage graphique entre un utilisateur et un système informatique. On effectue les actions suivantes :
- entrée d'une demande par l'utilisateur au niveau d'un poste client,
- Transmission de la demande à une partie serveur,
- Traitement de la demande et génération d'une réponse,
- Transmission de la réponse au poste client,
- Affichage du résultat de la réponse pour l'utilisateur,

Selon l'invention :
- On génère une réponse comprenant des données d'instruction et des données à afficher ;
- Au niveau du poste client, on interprète les données d'instruction déterminant un modèle de visualisation à exploiter ;
- Au niveau du poste client, on crée ledit modèle de visualisation par association d'éléments de construction disponibles localement,
- On fusionne les données à afficher avec le modèle de visualisation en vue de l'affichage du résultat de la fusion.

Application à la réalisation d'interface utilisateur graphique.

## Description

La présente invention concerne un procédé ainsi qu'un dispositif pour l'interfaçage graphique entre un utilisateur et un système informatique.

Elle trouvera en particulier son application dans le domaine de la réalisation d'interface graphique pour utilisateur, notamment dans le domaine des systèmes de réservation par ordinateur.

D'une façon générale, les interfaces utilisateurs ont connu une grande évolution depuis l'important succès des réseaux de large extension et en particulier de l'Internet.

Les solutions d'interfaçage graphique dans le cadre d'Internet ont permis d'importantes économies en matière de développement.

Cependant, pour des applications complexes, telles que des applications professionnelles de systèmes de réservation par ordinateur, les interfaces d'utilisateurs basées sur ces techniques nécessitent le transfert de grandes pages volumineuses dans un format de balisage du type HTML (pour Hyper Text Mark-up Language).

Des inconvénients liés à ce type de transmission de pages intégrales formées uniquement dans la partie serveur et transmises au navigateur du poste client posent plusieurs problèmes. En particulier, la partie client de l'interface d'utilisation présente d'importantes limitations structurelles, liées au langage HTML. En outre, compte-tenu du volume des transferts à opérer entre le serveur et le poste client, l'occupation du réseau de transmission est forte, ce qui implique un temps de réponse élevé pour les clients disposants d'une connexion à faible débit.

Il existe un besoin concernant des interfaces utilisateur disposant des atouts de richesse, de flexibilité et de performance des traitements opérés dans la partie serveur tout en assurant une réduction de l'occupation du réseau pour fournir l'affichage au client.

La présente invention s'inscrit dans le cadre de cette optimisation et permet de réduire d'une part le temps de calcul sur le serveur et d'autre part le trafic sur le réseau entre le serveur et le client, ce qui permet de diminuer le temps de réponse global de l'application. En outre, le dispositif de l'invention conserve une grande flexibilité car la partie serveur continue de contrôler le traitement des données à afficher. Le dispositif permet également de modifier et de créer les modèles de visualisation graphique à afficher pour l'utilisateur ainsi que de fournir des instructions en ce qui concerne l'affichage au poste client.

Plus précisément, l'invention a l'avantage de fournir aux moyens de visualisation des informations fusionnées entre deux sources de données. En effet, d'une part, le dispositif de l'invention génère des objets statiques conservés localement au niveau du poste client et permettant une disponibilité locale de multiples objets graphiques utilisés pour l'affichage.

D'autre part, les données dynamiques correspondant à la demande du client sont générées après traitement dans la partie serveur et transmises au poste client. Une fusion des données dynamiques et statiques est ensuite opérée pour produire la visualisation en particulier sous forme de pages au format HTML en utilisant une application de navigation.

En implémentant un équipement spécifique au niveau du poste client, on peut générer localement le modèle de visualisation à exploiter pour l'affichage. Cela est opéré par l'association de différents éléments de constructions du modèle qui seront détaillés plus loin dans la description.

Il s'ensuit que les données de construction des modèles de visualisation ne transitent plus par le réseau. En outre, le système est aisément personnalisable selon les exigences locales du poste client (objets graphiques spécifiques, règles logiques particulières à appliquer, données locales particulières à employer...).

Cette personnalisation potentielle du poste client n'affecte pas ses constituants d'origine et en particulier le navigateur : on peut en effet générer une page au format HTML directement exploitable par le navigateur.
On notera également que, les modèles de visualisation étant créés à partir d'objets de faibles tailles, leur mise à jour ne nécessite que peu de ressources réseau.

On réduit ainsi considérablement le volume des données à transmettre entre la partie serveur et le poste client. C'est ainsi que l'on bénéficie de la richesse des standards de langage de balisage (tel HTML) tout en diminuant considérablement le temps de réponse et les besoins en réseau.

D'autres buts et avantages apparaîtront au cours de la description qui suit d'un mode préféré de réalisation de l'invention qui n'est cependant pas limitatif.

La présente invention concerne un procédé pour l'interface graphique entre un utilisateur et un système informatique dans lequel on effectue les actions suivantes :
- entrée d'une demande par l'utilisateur au niveau d'un poste client,
- Transmission de la demande à une partie serveur,
- Traitement de la demande et génération d'une réponse,
- Transmission de la réponse au poste client,
- Affichage du résultat de la réponse pour l'utilisateur,

Selon l'invention :
- On génère une réponse comprenant des données d'instruction et des données à afficher ;
- Au niveau du poste client, on interprète les données d'instruction déterminant un modèle de visualisation à exploiter ;
- Au niveau du poste client, on crée ledit modèle de visualisation par association d'éléments de construction disponibles localement,
- On fusionne les données à afficher avec le modèle de visualisation en vue de l'affichage du résultat de la fusion.

Suivant des possibilités avantageuses mais non limitatives :
- Les éléments de construction comprennent une interface de description des objets du modèle de visualisation, une couche de présentation et des règles logiques à appliquer localement au modèle de visualisation ;
- Au niveau du poste client, on associe au modèle de visualisation crée un ressource de langage parmi les ressources de langage disponibles localement;
- Au niveau du poste client, on peut associer au modèle de visualisation des filtres de personnalisation d'affichage pour modifier le rendu visuel du modèle de visualisation par défaut;
- Les données d'instruction comportent l'indication du type et les éléments caractéristiques de construction de modèle de visualisation à créer ;
- On met à jour les données disponibles localement au niveau du poste client par les étapes suivantes :
   - On génère, au niveau du serveur, un message de stockage comprenant des données d'instruction de stockage et les données à stocker,
   - On transmet le message de stockage au poste client,
   - Au niveau du poste client, on interprète les données d'instruction pour exécuter le stockage et on stocke les données à stocker dans une mémoire locale.
- On effectue l'affichage au niveau du poste client par une application de navigation,
- On utilise des données à afficher et des éléments de construction des modèles de visualisation au format XML
- On traduit le résultat de la fusion au format HTML en vue de l'affichage.
- La réponse de la partie serveur comprend des données d'instruction et des données à afficher ;

L'invention est aussi relative à un dispositif d'interfaçage graphique entre un utilisateur et un système informatique comprenant :
- Des moyens d'entrée d'une demande par l'utilisateur au niveau d'un poste client,
- Des moyens de communication entre le poste client et une partie serveur,
- Des moyens de traitement dans la partie serveur pour la génération d'une réponse,
- Des moyens d'affichage du résultat de la réponse au niveau du poste client.

- Il comporte au niveau du poste client un gestionnaire d'instructions apte à interpréter les données d'instruction déterminant un modèle de visualisation à exploiter;
- Il comporte un moteur d'association au niveau du poste client apte à créer ledit modèle de visualisation par association d'éléments de construction ;
- Il comporte des moyens de stockage des éléments de constructions au niveau du poste client;
- Il comporte au niveau du poste client des moyens pour fusionner le modèle de visualisation et les données à afficher, en vue de l'affichage du résultat de la fusion.

A titre préféré :
- Les éléments de construction comprennent une interface de description des objets du modèle de visualisation, une couche de présentation et des règles logiques à appliquer localement au modèle de visualisation ;
- Il comporte un moteur de règles apte à appliquer les règles logiques du modèle de visualisation;
- Il comporte une application de navigation pour l'affichage du résultat de la fusion au niveau du poste client.

Les dessins ci-joints sont donnés à titre d'exemples et ne sont pas limitatifs de l'invention. Ils représentent seulement un mode de réalisation de l'invention et permettront de la comprendre aisément.

La figure 1 est une représentation schématique du traitement opéré actuellement entre un client et un serveur lorsqu'une requête est formulée par un client en utilisant une architecture basée sur le système Internet et l'usage d'un navigateur du type Internet Explorer ®.

La figure 2 présente schématiquement le traitement d'une demande par un client avec mise en oeuvre de l'invention.

La figure 3 illustre des blocs d'éléments constitutifs du dispositif de l'invention et leur communication.

La figure 4 montre 'étape de fusion de données réalisées.

La figure 5 est un exemple de composant intégré dans les moyens de visualisation du poste client.

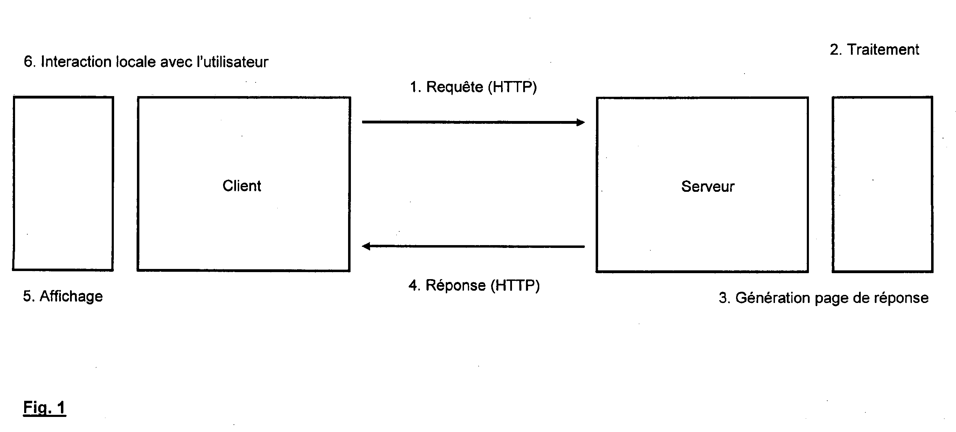

On a représenté en figure 1 un scénario standard lors de l'utilisation du réseau d'extension mondial usuellement dénommé « World Wide Web ». Dans ce cadre, les requêtes de l'utilisateur au niveau de la partie client correspondent à une demande de page au format HTML (Hyper Text Mark-up Language) avec les instructions suivantes : http get ou http post.

Une première limitation de ce mécanisme est que l'utilisateur doit préciser la fenêtre qui va réaliser l'affichage de la réponse et ce avant d'envoyer la requête. Le serveur ne peut donc pas décider d'afficher la réponse dans une fenêtre de dialogue ou sur la fenêtre principale puisque cela a déjà été défini au niveau du client.

Un autre inconvénient que l'on peut soulever est qu'une seule fenêtre peut être rafraîchie à la fois. Par exemple, si la fenêtre principale avait été divisée en deux sous-fenêtres, il est nécessaire à l'utilisateur d'adresser deux requêtes successives au serveur pour obtenir le rafraîchissement successif des deux sous fenêtres. Par ailleurs, les modifications d'affichage se font uniquement par rafraîchissement de l'intégralité d'une partie de l'écran alors qu'il est possible que la demande du client ne réponde qu'à une simple demande de mise à jour de certaines données. Suivant le dispositif actuel, il est cependant nécessaire de rafraîchir l'intégralité de l'écran pour n'importe quel type de modification demandée.

Il n'y a pas de moyen efficace pour stocker des informations au niveau du poste client si ce n'est le recours à des « cookies » (témoins) qui sont cependant de petite taille et qui nécessite un transit par le réseau à chaque requête.

Une fois que l'utilisateur a saisi sa requête celle-ci est transmise par le biais du réseau Internet avec le support de protocoles de communication du type http (Hyper Text Transfer Protocol). Cette étape est représentée au repère 1 à la figure 1. Le traitement de la requête est opéré au niveau du serveur et est présenté au repère 2. Une réponse est ensuite générée comme présentée au repère 3, ici sous forme de page au format HTML qui implique la combinaison dans une même réponse des éléments de données et des éléments de présentation de ce qui doit être affiché à l'utilisateur. A chaque fois que l'on souhaite accéder à une page, il faut ainsi télécharger depuis la partie serveur l'intégralité de la page HTML contenant les données à afficher (données variables et données « statiques » de formatage - ex : textes d'aide, couleurs, polices de caractères...). Ainsi le volume des pages transmises sur le réseau s'avère important.

Le repère 4 de la figure 1 montre que la réponse sous forme de page Web est adressée au client. Il faut noter que pour des applications professionnelles les données doivent être encryptées ce qui implique un temps de traitement et un coût induit d'autant plus important que le volume des données à crypter est élevé.

Au niveau du poste client, l'utilisateur peut ensuite disposer de l'affichage de la réponse comme présenté au point 5 en figure 1. Cet affichage est réalisé par le biais d'une application de navigation telle que celle disponible sous la marque Internet Explorer ®.

Au niveau local, certaines actions peuvent alors avoir lieu pour éviter de recourir systématiquement au serveur. Ainsi certaines applications par exemple éditées en Java Script peuvent être implémentées au niveau du poste client pour produire certains outils. Un autre inconvénient des dispositifs actuels est donc qu'il nécessite de recourir à des outils additionnels à programmer au langage Java Script au niveau du poste client.

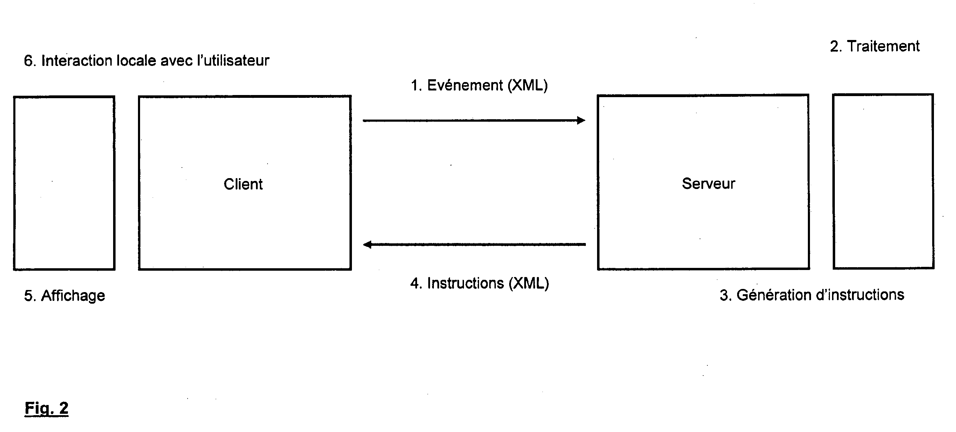

La figure 2 présente au contraire un exemple de scénario de fonctionnement d'un dispositif d'interfaçage graphique selon l'invention.

Comme indiqué précédemment, l'architecture actuelle utilisée dans le cadre du réseau Internet (World Wide Web) pose des problèmes dans la mesure où l'intégralité de pages au format HTML sont téléchargées vers le poste client.

Comme visible en figure 2, tel n'est pas le cas de la présente invention.

Plus particulièrement, lorsque l'utilisateur entre une requête à destination de la partie serveur, une demande sous forme d'un message contenant les informations saisies par l'utilisateur est générée au format XML (Extensible Mark-up Language) ou sous un autre format structuré. Dans la mesure où la demande du client ainsi générée reflète l'action de l'utilisateur, elle a été dénommée « événement » à la référence 1 de la figure 2.

Après transmission, cette demande « événement » est reçue et traitée au niveau de la partie serveur. La première phase du traitement consiste en une analyse du contenu de la demande ce qui est fait au niveau d'une couche d'interface utilisateur du serveur qui sera présenté plus en détail ci-après. Ensuite, on procède au traitement des données de la demande « événement » au niveau d'une couche d'application qui sera également présentée plus loin.

Ces phases sont présentées au repère 2 « traitement » de la figure 2. Une fois que la demande a été traitée, la partie serveur génère la réponse appropriée à l'attention du client. Dans ce cadre, au lieu de construire une page au format HTML complète, on génère selon l'invention une suite d'instructions qui sera à interpréter par le client. Cela donne en particulier une grande flexibilité en ce qui concerne le comportement du poste client. Par exemple, un seul message peut permettre d'opérer des opérations de rafraîchissement d'une partie de l'écran, d'ouvrir une boîte de dialogue, d'afficher une boîte de message etc... et ce de façon simultanée.

Une fois créé, le message est transmis sous forme d'un document XML (Extensible Mark-up Language) éventuellement après compression et cryptage en direction du poste client. Cette opération est représentée au repère 4 par le terme instruction qui correspond à la fonctionnalité décrite au paragraphe précédent.

Ce message d'instruction est reçu au niveau du poste client et doit être interprété.

En particulier, les données dynamiques comprises dans la réponse du serveur sont récupérées et pourront être fusionnées avec un modèle de visualisation qui correspond aux objets statiques nécessaires à l'affichage. Chaque modèle de visualisation est par ailleurs créé, au niveau du poste client, par association d'éléments de construction. Ce sont les données d'instruction qui déterminent les éléments de construction à associer. La combinaison par fusion des deux types de données (couche de présentation et données dynamiques issues du serveur) permet la création de données complètes à afficher, en particulier sous forme d'une page au format HTML. On peut dans ce cadre utiliser pour la visualisation les fonctionnalités de moyens de navigation connus et standard, tels que le navigateur diffusé sous la marque Internet Explorer ®.

Les avantages de l'opération de fusion ainsi réalisée dans la partie client sont multiples. En premier lieu, une fois que les modèles de visualisation et leurs éléments de dépendance (images, scripts, etc... auxquels font appel les modèles) ont été récupérés et sont disponibles au niveau du poste client, seules les données dynamiques sont à adresser par le biais du réseau de communication. On abaisse donc fortement la consommation du réseau.

La mise à jour des données statiques est de plus très économe en ressources de transmission car il s'agit d'éléments de petite dimension. Par exemple, si un objet graphique est à changer, il n'est pas nécessaire de charger tout le modèle de visualisation qui l'utilise.

En outre, seul le canal de transmission des données a besoin d'être sécurisé dans les moyens de communication ce qui permet de limiter les capacités d'encryptage nécessaires lorsque l'on souhaite sécuriser les communications.

Une fois que la fusion est opérée, son résultat peut être affiché au niveau du poste client tel que présenté à l'étape 5 de la figure 2.

Une interaction locale avec l'utilisateur est ensuite possible tel que présenté au point 6 et met en oeuvre un moteur de règles apte à appliquer des règles logiques associées au modèle de visualisation exploité et disponible localement, tel que cela sera précisé plus loin. Elle peut inclure différents fonctionnements.

En particulier, si les instructions transmises par le serveur correspondent à des contrôles (tels un bouton pour l'affichage d'une liste déroulante), les événements à réaliser peuvent être gérés par un code au format de langage Java Script associé au contrôle considéré.

Si les événements à opérer comportent des interactions entre différents contrôles (par exemple si le champ A est renseigné, le champ B devient alors obligatoire) on peut opérer de différentes façons.

Ainsi, si l'interaction est complexe mais rarement utilisée, elle peut être gérée au niveau du serveur et demandée sous forme d'une requête formulée par le poste client au poste serveur.

Si l'interaction est simple et peut être facilement implémentée, elle est gérée au niveau du poste client par le moteur de règle local.

Enfin, si aucune des éventualités précédentes ne semble opportune, il est possible de réaliser des courts éléments de codage au format Java Script à lier à la page pour réaliser une fonctionnalité telle qu'actuellement connue dans le domaine des pages HTML utilisées pour le World Wide Web.

On décrit ci-après plus précisément une structure possible du dispositif de l'invention. Ce dispositif comprend une partie serveur implémentée avec des moyens informatiques connus comprenant des moyens de traitement sous forme de processeur et des moyens de stockage sous forme de mémoire du type RAM (Random Access Memory) ou ROM (Read Only Memory). La partie serveur s'entend d'une seule entité de serveur informatique distant ou de plusieurs serveurs connectés entre eux par des moyens de transmission usuels.

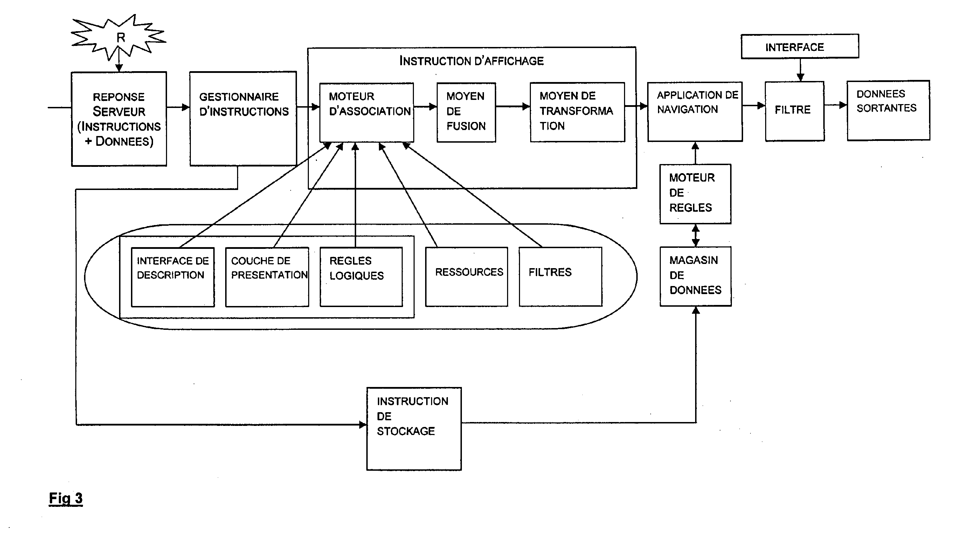

Le dispositif comprend également une partie implémentée localement au niveau du poste client pouvant par exemple être réalisée par un ordinateur personnel du type PC (Personal Computer), visible en figure 3.

La partie serveur et le poste client sont reliés pour la transmission de données par le biais de moyens de communication pouvant par exemple être réalisés par l'intermédiaire d'un réseau (R) de large extension (WAN : Wide Area Network).

On a représenté en figure 3 différents constituants du dispositif de l'invention et leur relation afin de mettre en oeuvre le procédé d'interfaçage ici décrit.

Par l'intermédiaire du réseau représenté R, la partie serveur transmet une réponse à la demande formulée antérieurement par l'utilisateur, la réponse comprenant des données d'instructions et des données à afficher.

On pourra notamment utiliser le standard XML comme format de langage de balisage. La réponse est reçue au niveau d'un gestionnaire d'instructions apte à interpréter les données d'instruction contenues dans la réponse pour déterminer les actions à mener. Dans le cas d'un affichage à réaliser, l'interprétation comprend la détermination des éléments de construction à utiliser pour la génération du modèle de visualisation.

Les résultats de l'interprétation sont transmis à un moteur d'association apte à récupérer les données statiques constituant les éléments de construction caractéristiques du modèle de visualisation précédemment déterminé. On a représenté en figure 3 différents éléments de construction utilisés pour la création du modèle de visualisation. En particulier, le modèle de visualisation associe une interface de description décrivant les composants de haut niveau du modèle de visualisation, une couche de présentation rassemblant les différents éléments et attributs liés à une présentation graphique et des règles logiques qui correspondent à la logique locale qui doit être appliquée au modèle de visualisation durant son traitement.

A titre préféré, la couche de présentation peut dépendre des profils d'utilisateur, mais l'interface de description et les règles logiques demeurent identiques. Les éléments de construction peuvent par conséquent être des données totalement indépendantes et être stockés dans des fichiers séparés ou dans un même fichier selon les besoins.

D'autres éléments sont par ailleurs avantageusement associés aux modèles de visualisation ainsi crées. En particulier, des données de ressources de langage sont associées. Ces données sont également choisies parmi différentes ressources disponibles localement en mémoire cache au niveau du poste client. On peut ainsi facilement adapter la page à créer à une langue prédéterminée. L'indication de la ressource de langage à utiliser est également présente dans les données d'instructions reçues dans la réponse.

On peut aussi associer au modèle de visualisation un ou plusieurs filtres. Ces filtres complètent la personnalisation rendue possible par la présente invention. En effet, ils permettent d'adapter l'information disponible à l'écran à des paramètres particuliers au client. C'est un moyen particulièrement efficace de modifier les composants visuels de l'écran de façon non programmatique, par exemple en ce qui concerne les contrôles utilisateur (ex : suppression de certains contrôles de l'écran, modification du caractère obligatoire de certains champs de saisie... )

Au final, l'association du modèle de visualisation, du ou des filtres, des ressources de langage et des données dynamiques reçues dans la réponse du serveur permet de former une page.

Cette association est présentée plus particulièrement à la figure 5.

En revenant à la figure 3, on a représenté que la fusion entre les données statiques ainsi associées et les données dynamiques contenues dans la réponse s'opère au niveau d'un moyen de fusion. Par le biais de la fusion on peut par exemple, créer des données au format XML.

Les applications de navigation standards, en particulier Internet Explorer ®, exploitent des pages au format HTML. On effectue donc avant la transmission à l'application de navigation une transformation vers ce format HTML par le biais de moyens de transformation.

Les étapes débouchant à la visualisation pour l'utilisateur sont alors celles implémentées conventionnellement avec les navigateurs existants. Cependant, pour permettre une interaction améliorée avec l'utilisateur sans un recours systématique à l'activité de la partie serveur, le dispositif de l'invention comporte également un moteur de règles apte à exploiter les règles contenues dans un magasin de données. De cette façon, on peut gérer des interactions simples entre le navigateur et l'utilisateur. Par exemple, on peut déterminer localement les données à prévoir dans un menu déroulant suivant le profil du client et suivant la saisie précédemment opérée par l'utilisateur. On évite ainsi un recours systématique à une interrogation du serveur après une saisie du client.

On a également représenté en figure 3 une possibilité de mise à jour ou d'ajout de données dans le magasin de données. En effet, il peut être utile de rafraîchir ou d'augmenter les données contenues localement dans le magasin de données et servant au moteur de règles. Pour ce faire, on adresse depuis la partie serveur jusqu'au poste client une réponse contenant des données d'instructions et des données à exploiter, ici en vue de leur stockage et non en vue de l'affichage.

A réception, l'instruction de stockage est interprétée ce qui résulte en une action de stockage des données contenues dans la réponse dans le magasin de données. Cette étape est également représentée en figure 3.

Par ailleurs, le poste client comporte avantageusement un élément de cache constituant un moyen de stockage de données disponible au niveau local et dans lequel peut être stockée une pluralité de données comprenant les différents éléments de construction. Il s'agit donc de données statiques qui sont généralement utilisées pour des pages de type HTML. Tout type de mémoire peut être utilisé pour une telle mémoire cache et en particulier une mémoire morte de type ROM (Read Only Memory).

Suivant une première possibilité, les données statiques sont installés dès le départ au niveau du poste client et utilisés lorsqu'ils sont demandés pour être fusionnés avec des données issues du serveur. Ainsi, le serveur n'a pas à transmettre les différents éléments ou objets utilisés pour l'affichage.

Il peut également arriver que des éléments nécessaires à l'affichage mais non présents initialement au niveau du poste client doivent être utilisés.

Dans ce cadre, la présente invention permet la création des éléments de construction au niveau de la partie serveur et leur transmission une seule fois au poste client pour stockage dans le cache et réutilisation ultérieure.

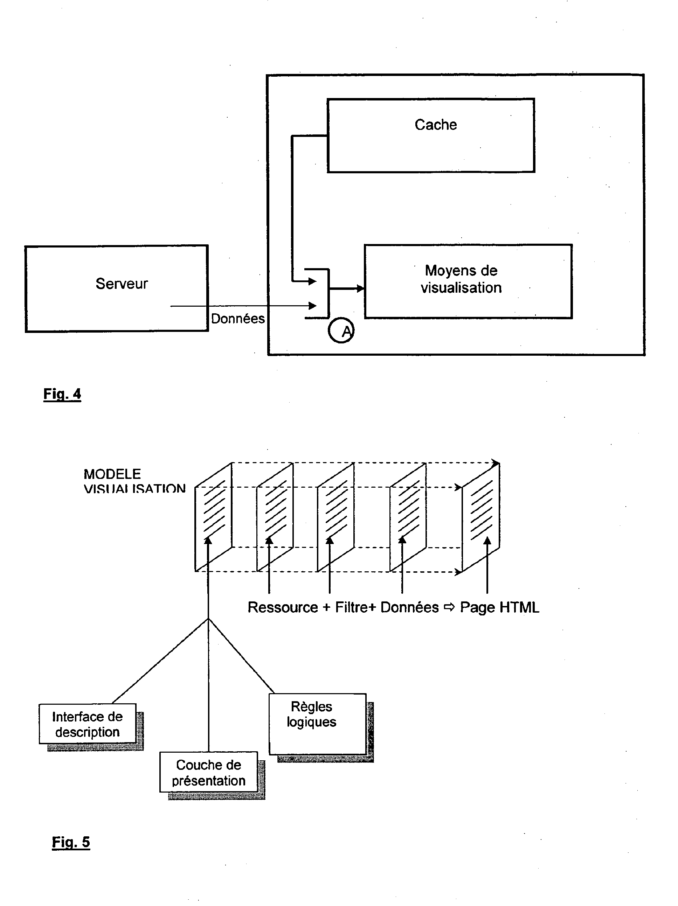

On a représenté en figure 4 l'étape de fusion opérée entre les données issues du serveur et les données issues du cache local après leur association.

Dans ce cadre, il est représenté que la fusion s'effectue dans la partie du poste client après réception des données dynamiques issues du serveur dans les instructions constitutives de la réponse du serveur. Le gestionnaire d'instructions, à réception des données du serveur, appelle les éléments du modèle de visualisation correspondant présents dans le cache. On les associe et on opère la fusion pour la réalisation par exemple d'une page à transmettre aux moyens de visualisation.

Si un élément de construction nécessaire n'est pas présent initialement dans le cache, l'opération décrite précédemment concernant sa transmission depuis la partie serveur au poste client est réalisée auparavant.

Avantageusement, on exploite des données au format XML pour la création du modèle de visualisation et pour les données à afficher. Une traduction au format HTML peut être opérée après la fusion par des moyens de transformation de façon à obtenir un résultat sous forme de page HTML directement exploitable par une application de navigation conventionnelle.

On notera que l'objet de la présente invention assure une grande souplesse dans le développement des interfaces utilisateur graphique tout en limitant les volumes des données transmises au travers des réseaux. Par ailleurs, le poste client reste une structure légère et facilement installée et la partie serveur conserve un rôle primordial dans le traitement des données et la gestion des éléments de visualisation.

## Revendications

1. Procédé pour l'interface graphique entre un utilisateur et un système informatique dans lequel on effectue les actions suivantes :
- entrée d'une demande par l'utilisateur au niveau d'un poste client,
- Transmission de la demande à une partie serveur,
- Traitement de la demande et génération d'une réponse,
- Transmission de la réponse au poste client,
- Affichage du résultat de la réponse pour l'utilisateur,
**Caractérisé par le fait que**
- On génère une réponse comprenant des données d'instruction et des données à afficher ;
- Au niveau du poste client, on interprète les données d'instruction déterminant un modèle de visualisation à exploiter;
- Au niveau du poste client, on crée ledit modèle de visualisation par association d'éléments de construction disponibles localement,
- On fusionne les données à afficher avec le modèle de visualisation en vue de l'affichage du résultat de la fusion.

2. Procédé selon la revendication 1,
**Caractérisé par le fait que**
Les éléments de construction comprennent une interface de description des objets du modèle de visualisation, une couche de présentation et des règles logiques à appliquer localement au modèle de visualisation.

3. Procédé selon la revendication 1 ou 2 dans lequel,
**Caractérisé par le fait que**
Au niveau du poste client, on associe au modèle de visualisation créé une ressource de langage parmi les ressources de langage disponibles localement ou téléchargeables de la partie serveur.

4. Procédé selon l'une quelconque des revendications 1 ou 3,
**Caractérisé par le fait que**
Au niveau du poste client, on associe au modèle de visualisation des filtres de personnalisation d'affichage pour modifier le rendu visuel du modèle de visualisation.

5. Procédé selon l'une quelconque des revendications 1 à 4,
**Caractérisé par le fait que**,
Les données d'instruction comportent l'indication du type et des éléments de construction caractéristiques de modèle de visualisation à créer.

6. Procédé selon l'une quelconque des revendications 1 à 5,
**Caractérisé par le fait que**,
On met à jour les données disponibles localement au niveau du poste client par les étapes suivantes :
- On génère, au niveau du serveur, un message de stockage comprenant des données d'instruction de stockage et les données à stocker,
- On transmet le message de stockage au poste client,
- Au niveau du poste client, on interprète les données d'instruction pour exécuter le stockage et on stocke les données à stocker dans une mémoire locale.

7. Procédé selon l'une quelconque des revendications 1 à 6,
**Caractérisé par le fait que**,
On effectue l'affichage au niveau du poste client par une application de navigation.

8. Procédé selon l'une quelconque des revendications 1 à 7,
**Caractérisé par le fait que**,
- On utilise des données à afficher et des éléments de construction des modèles de visualisation au format XML
- On traduit le résultat de la fusion au format HTML en vue de l'affichage.

9. Dispositif d'interfaçage graphique entre un utilisateur et un système informatique, selon l'une quelconque des revendications 1 à 5, comprenant :
• Des moyens d'entrée d'une demande par l'utilisateur au niveau d'un poste client,
• Des moyens de communication entre le poste client et une partie serveur,
• Des moyens de traitement dans la partie serveur pour la génération d'une réponse,
• Des moyens d'affichage du résultat de la réponse au niveau du poste client.
**Caractérisé par le fait que**,
- La réponse de la partie serveur comprend des données d'instruction et des données à afficher ;
- Il comporte, au niveau du poste client, un gestionnaire d'instructions apte à interpréter les données d'instruction déterminant un modèle de visualisation à exploiter;
- Il comporte un moteur d'association au niveau du poste client apte à créer ledit modèle de visualisation par association d'éléments de construction ;
- Il comporte des moyens de stockage des éléments de construction au niveau du poste client;
- Il comporte, au niveau du poste client, des moyens pour fusionner le modèle de visualisation et les données à afficher, en vue de l'affichage du résultat de la fusion.

10. Dispositif selon la revendication 9,
**Caractérisé par le fait que**,
Les éléments de construction comprennent une interface de description des objets du modèle de visualisation, une couche de présentation et des règles logiques à appliquer localement au modèle de visualisation.

11. Dispositif selon la revendication 10,
**Caractérisé par le fait que**
Il comporte un moteur de règles apte à appliquer les règles logiques du modèle de visualisation.

12. Dispositif selon l'une quelconque des revendications 9 à 11,
**Caractérisé par le fait que**,
Il comporte une application de navigation pour l'affichage du résultat de la fusion au niveau du poste client.
